# EUROPÄISCHE PATENTSCHRIFT

(11) **EP 1 321 701 B1**
(45) Veröffentlichungstag und Bekanntmachung des Hinweises auf die Patenterteilung: **21.06.2006**
(21) Anmeldenummer: 02406103.8
(22) Anmeldetag: 17.12.2002
(51) Int. Cl.: F16L 3/10

(54) **Rohrschelle**
Pipe clamp
Collier de serrage

(30) Priorität: 21.12.2001 CH 23452001
(43) Veröffentlichungstag der Anmeldung: 25.06.2003
(73) Patentinhaber: GEBERIT TECHNIK AG, 8645 Jona (CH)
(72) Erfinder: Hellemann, Ricardo, 9472 Grabs (CH)
(74) Vertreter: Groner, Manfred

(56) Entgegenhaltungen:
- DE-A- 1 813 125
- DE-A- 2 441 297
- DE-U- 29 518 999

## Beschreibung

Die Erfindung betrifft eine Rohrschelle nach dem Oberbegriff des Anspruchs 1.

Die DE 24 41 297 A offenbart eine Rohrschelle mit einem halbkreisförmigen Tragbügel und einem Spannbügel. Der Tragbügel besitzt an seinen beiden Enden jeweils einen Haken und der ebenfalls halbkreisförmige Spannbügel an seinen beiden Enden jeweils drei Öffnungen. Zum Spannen besitzt der Spannbügel eine Klemmstelle, die zum Spannen mit einer Zange deformiert wird. Um den Spannbügel zu montieren, wird dieser von unten radial auf den Tragbügel aufgesetzt, wobei die genannten Haken jeweils in eine der Öffnungen eingreifen.

Die DE 1 813 125 A offenbart eine Halterungsschelle für elektrische Verkabelungen, Seile und Rohre. Eine obere Halbschale und eine untere Halbschale werden bei der Montage zusammengesteckt. Zum Spannen wird nach dem Zusammenstecken das eine Ende einer Halbschale umgebogen.

Die DE 295 18 999 offenbart einen Befestigungsbügel, der einen halbkreisförmigen Tragbügel und einen halbkreisförmigen Spannbügel besitzt. Der Spannbügel wird an seinem einen Ende in einen Haken des Tragbügels eingehängt und an seinem anderen Ende mit einer Schraube gespannt.

Eine Rohrschelle der genannten Art ist im Stand der Technik aus der CH 654 114 A5 des Anmelders bekannt geworden. Bei dieser sind die beiden Einhängestellen im Abstand zueinander angeordnete Schlitze, welche in die Lasche eingearbeitet sind.

Beim Einhängen des Hakens in einen äusseren Schlitz ist die Rohrschelle in ihrem Inneren weiter als beim Einhängen des Hakens in einen weiter innen liegenden Schlitz. Das Einhängen des Hakens in den äusseren Schlitz ist einfach und kann ohne Demontage der Spannschraube einhändig erfolgen. Mit der einen Hand wird der Haken in den Schlitz eingehängt und mit der anderen Hand wird die Rohrleitung festgehalten. Nach dem Einhängen des Hakens muss lediglich noch die Spannschraube angezogen werden. Muss der Haken jedoch in den inneren Schlitz eingehängt werden, muss in der Regel die Spannschraube herausgedreht werden, damit der Haken eingehängt werden kann. Nach dem Einhängen des Hakens muss dann die Spannschraube wieder eingedreht und angezogen werden. Das Einhängen des Hakens ist in diesem Fall nicht einhändig möglich. Die Montage ist somit wesentlich aufwendiger, wobei berücksichtigt werden muss, dass der Montageort häufig schlecht zugänglich ist.

Durch die EP 0 760 445 B ist eine Rohrschelle bekannt geworden, bei dem ein Tragbügel und ein Spannbügel mit zwei Spannschrauben spannbar sind. Bei der Montage wird der Spannbügel um die eine Spannschraube verschwenkt.

Die WO 89/01106 offenbart eine Rohrschelle mit einem Tragbügel und einem Spannbügel, die jeweils an einem Ende mit einer Spannschraube und am anderen Ende mit zwei ineinandergreifende Laschen miteinander verbunden sind.

Der Erfindung liegt die Aufgabe zugrunde, eine Rohrschelle der genannten Art zu schaffen, die für unterschiedliche Rohrdurchmesser geeignet und trotzdem einfach und einhändig montierbar ist.

Die Aufgabe ist bei einer gattungsgemässen Rohrschelle dadurch gelöst, dass die Lasche mit den wenigstens zwei Einhängestellen so geformt ist, dass sie bei der Montage seitlich in den Tragbügel aufschiebbar ist. Bei der erfindungsgemässen Rohrschelle wird bei der Montage der Tragbügel eng an das Leitungsrohr angelegt und der Spannbügel bei loser Spannschraube verschwenkt und das freie Ende seitlich über den Haken geführt. Das Verschwenken des Spannbügels kann einhändig erfolgen. Der Spannbügel muss weder aufgespreizt werden, noch muss die Spannschraube abgenommen werden. Das Einhängen des Spannbügels ist auch unter schwierigen örtlichen Begebenheiten, wie sie im Sanitärbereich häufig sind, möglich. Die Erfindung ermöglicht somit eine einfachere Montage und eine wesentliche Zeitersparnis.

Nach einer Weiterbildung der Erfindung ist die Lasche mit den wenigstens zwei Einhängestellen im Bereich einer inneren Einhängestelle wulstförmig deformiert. Dieser Wulst ist radial nach aussen gerichtet und kann ohne wesentliche Minderung der Stabilität in einfacher Weise hergestellt werden. Nach einer Weiterbildung der Erfindung ist die Lasche mit den wenigstens zwei Einhängestellen winkelförmig ausgebildet, wobei die Kniekehle im Bereich der inneren Einhängestelle angeordnet ist.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Figur 1: schematisch eine Ansicht einer montierten erfindungsgemässen Rohrschelle,
- Figur 2: schematisch eine Ansicht der erfindungsgemässen Rohrschelle gemäss Fig. 1, jedoch ohne eingehängte Lasche,
- Figur 3: schematisch eine Teilansicht der Rohrschelle gemäss Fig. 2,
- Figur 4: ein Teilschnitt durch eine Rohrschelle gemäss einer weiteren Variante,
- Figur 5: schematisch ein Teilschnitt durch eine erfindungsge mässen Rohrschelle gemäss einer weiteren Variante und
- Figur 6: schematisch das seitliche Einhängen des Spannbügels.

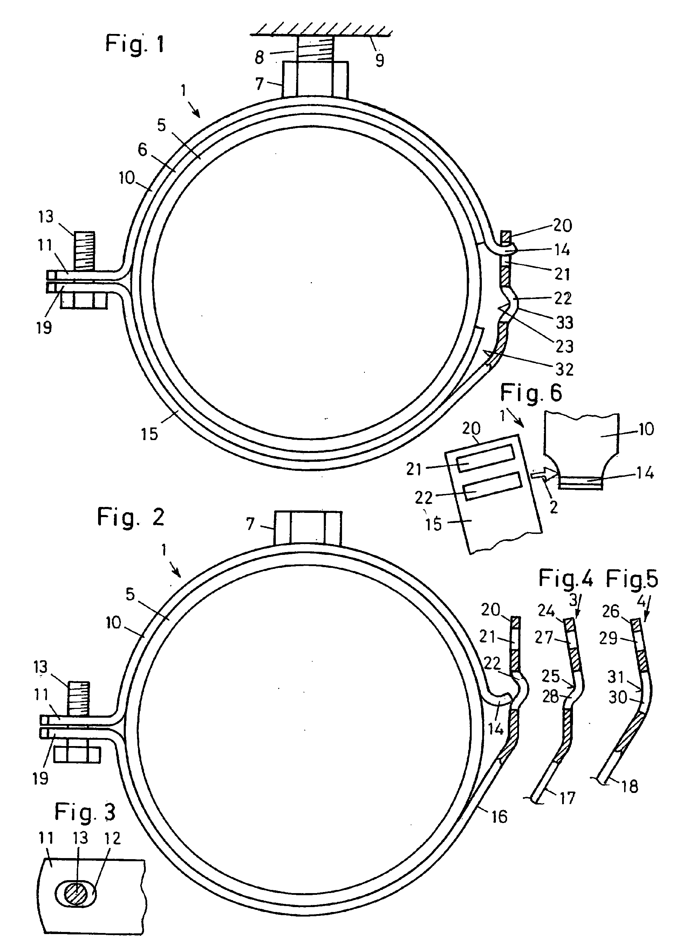

Die in Fig. 1 gezeigte Rohrschelle 1 weist einen Tragbügel 10 und einen Spannbügel 15 auf, die jeweils aus einem Metallband hergestellt sind. An dem halbkreisförmigen Tragbügel 10 ist eine Gewindemuffe 7 angeschweisst, die zur Befestigung der Rohrschelle 1 an einem Verankerungsbolzen 8 einer Decke 9 oder einer Gebäudewand bestimmt ist. Wie ersichtlich, ist der Tragbügel 10 an seinem einen Ende mit einer Lasche 11 versehen, in die ein Gewinde zur Aufnahme einer Spannschraube 13 versehen ist. Am anderen Ende ist der Spannbügel 10 mit einem vergleichsweise kurzen radial vorstehenden Haken 14 versehen, der durch eine Umbiegung um 45-135° vorzugsweise etwa 90° hergestellt wurde.

Der Spannbügel 15 weist ebenfalls am einen Ende eine Lasche 19 mit einem Langloch zur Aufnahme der Spannschraube 13 auf. Das andere Ende ist durch eine Lasche 20 gebildet, die zwei im Abstand zueinander angeordnete Einhängestellen aufweist, die jeweils durch einen Schlitz 21 bzw. 22 gebildet sind. Die Lasche 20 ist an einer Biegung 32 um etwa 40° abgewinkelt und im Bereich eines inneren Schlitzes 22 mit einem Radial nach aussen gerichteten Wulst 33 versehen. Der Wulst 33 ist durch eine Deformation der Lasche 20 hergestellt und bildet innenseitig eine ringförmige Vertiefung 23. Die Lasche 20 ist in Fig. 1 mit dem äusseren Schlitz 21 am Haken 14 eingehängt. Die Spannschraube 13 ist festgezogen und die beiden Bügel 10 und 15 umfassen das Leitungsrohr 5 sowie z.B. ein Schweissband 6 unter Spannung.

Die Fig. 2 zeigt die Rohrschelle 1 direkt an einem Leitungsrohr 5 kurz vor dem Einhängen der Lasche 20. Aufgrund des kleineren Aussendurchmessers der Rohrleitung 5 wird in diesem Fall die Lasche 20 am Schlitz 22 eingehängt. Der Montagevorgang an der Rohrleitung 5 wird nachfolgend erläutert.

Um das Leitungsrohr 5 an der Rohrschelle 1 zu befestigen wird bei loser Spannschraube 13 und ausgeschwenktem Spannbügel 16 der Tragbügel 10 mit der einen Hand am Leitungsrohr 5 festgehalten und mit der anderen Hand der Spannbügel 16 verschwenkt und in die in Fig. 2 gezeigte Position gebracht. Der Schwenkvorgang des Spannbügels 16 ist in Fig. 6 schematisch gezeigt. Wie ersichtlich, wird die Lasche 20 durch eine Schwenkbewegung gemäss Pfeil 2 seitlich auf den Tragbügel 10 aufgeschoben, so dass der Haken 14 unter geringer Dehnung des Spannbügels 16 in den Schlitz 22 eingeführt werden kann. Anschliessend wird die Spannschraube 13 festgezogen und damit die Rohrschelle 1 gespannt. Beim Verschwenken des Spannbügels 16 ergibt das Langloch 12 eine etwas grössere Bewegungsfreiheit. Das Langloch 12 ist jedoch nicht zwingend. Wesentlich ist, dass der Spannbügel 16 mit lediglich einer Hand eingehängt werden kann und die Spannschraube 13 nicht abgenommen, sondern lediglich gelockert werden muss.

Die Fig. 4 zeigt eine Rohrschelle 3, die sich von der Rohrschelle 1 lediglich durch die Formgebung eines Spannbügels 17 im Bereich einer Lasche 24 unterscheidet. Diese Lasche 24 weist ebenfalls zwei Schlitze 27 und 28 auf, an denen wahlweise im montierten Zustand der Haken 14 eingreift. Die Deformation, die ein seitliches Einhängen der Lasche 24 ermöglicht, ist eine Stufe 25, die sich im Bereich des inneren Schlitzes 28 befindet. Der Montagevorgang erfolgt bei der Rohrschelle 3 gleich wie bei der Rohrschelle 1.

Die Fig. 5 zeigt eine Rohrschelle 4 gemäss einer Variante, bei welcher ein Spannbügel 18 eine Lasche 26 aufweist, die winkelförmig ausgebildet ist. Die Biegung ist so angeordnet, dass sich im Bereich eines inneren Schlitzes 30 eine Kehle 31 bildet, durch welche dieser innere Schlitz 30 radial nach aussen versetzt ist. Ein äusserer Schlitz 29 ermöglicht das Einhängen des Spannbügels 18 im Fall eines Rohres 5 mit vergleichsweise grossem Aussendurchmesser. Auch bei der Rohrschelle 4 erfolgt die Montage wie oben erläutert.

Die Rohrschellen 1, 3 und 4 können wie bisher aus drei Einzelteilen sehr kostengünstig hergestellt werden.

## Patentansprüche

1. Rohrschelle, insbesondere zum Befestigen einer Rohrleitung (5, 6) an einer Gebäudewand, mit einem Tragbügel (10) und einem etwa halbkreisförmigen Spannbügel (15 bis 18), die aus einem Metallband gebogen sind, mit ersten Verbindungsgliedern (11, 13, 19) und zweiten Verbindungsgliedern (14, 20, 24, 26) zum Verbinden der Enden des Tragbügels (10) mit den Enden des Spannbügels (15 bis 18), wobei die zweiten Verbindungsglieder (14, 20, 24, 26) einen Haken (14) und eine Lasche (20, 24, 26) mit wenigstens zwei Einhängestellen (21, 22; 27, 28; 29, 30) aufweist, **dadurch gekennzeichnet, dass** die ersten Verbindungsglieder (11, 13, 19) eine Spannschraube (13) und zwei Laschen (11, 19) aufweisen und die Lasche (20, 24, 26) mit den wenigstens zwei Einhängestellen (21, 22; 27, 28; 29, 30) so geformt ist, dass sie bei der Montage nach dem Verbinden der beiden Laschen (11, 19) der ersten Verbindungsgliedern (11, 13, 19) mit der Spannschraube (13) durch eine Schwenkbewegung seitlich auf den Tragbügel (10) aufschiebbar ist und dass der Tragbügel (10) und der Spannbügel (15 bis 18) hierbei mit der Spannschraube (13) schwenkbar miteinander verbunden sind und die Rohrschelle (1, 3, und 4) nach dem Einhängen der Lasche (20, 24, 26) mit der Spannschraube (13) spannbar ist.

2. Rohrschelle nach Anspruch 1, **dadurch gekennzeichnet, dass** die Einhängestellen (21, 22; 27, 28; 29, 30) als Schlitze ausgebildet sind.

3. Rohrschelle nach Anspruch 1 oder 2, **dadurch gekennzeichnet, dass** die Lasche (20) im Bereich einer inneren Einhängestelle (22) wulstförmig deformiert ist.

4. Rohrschelle nach Anspruch 1 oder 2, **dadurch gekennzeichnet, dass** die Lasche (26) winkelförmig ausgebildet ist, wobei die Lasche (26) im Bereich einer inneren Einhängestelle (30) gebogen ist.

5. Rohrschelle nach Anspruch 1 oder 2, **dadurch gekennzeichnet, dass** die Lasche (24) im Bereich einer inneren Einhängestelle (28) stufenförmig deformiert ist.

6. Rohrschelle nach einem der Ansprüche 1 bis 5, **dadurch gekennzeichnet, dass** der Haken (14) durch eine Aufbiegung zwischen 45°-135° gebildet ist.

## Claims

1. Pipe clamp, especially for attaching a pipe (5, 6) to a building wall, having a supporting bracket (10) and an approximately semicircular clamp (15 to 18), which are bent out of a metal strip, having first connecting members (11, 13, 19) and second connecting members (14, 20, 24, 26) for connecting the ends of the supporting bracket (10) to the ends of the clamp (15 to 18), the second connecting members (14, 20, 24, 26) comprising a hook (14) and a tie piece (20, 24, 26) having at least two hook-in points (21, 22; 27, 28; 29, 30), **characterized in that** the first connecting members (11, 13, 19) comprise a clamping bolt (13) and two tie pieces (11, 19), and the tie piece (20, 24, 26) having the at least two hook-in points (21, 22; 27, 28; 29, 30) is shaped such that during the assembly, after the two tie pieces (11, 19) of the first connecting members (11, 13, 19) have been connected by means of the clamping bolt (13), it can be slid by a swivel motion laterally onto the supporting bracket (10), and **in that** the supporting bracket (10) and the clamp (15 to 18) are herein connected pivotably together by means of the clamping bolt (13), and the pipe clamp (1, 3, 4), once the tie piece (20, 24, 26) has been hooked in, can be clamped by means of the clamping bolt (13).

2. Pipe clamp according to Claim 1, **characterized in that** the hook-in points (21, 22; 27, 28; 29, 30) are configured as slots.

3. Pipe clamp according to Claim 1 or 2, **characterized in that** the tie piece (20), in the region of an inner hook-in point (22), is deformed in the shape of a bulge.

4. Pipe clamp according to Claim 1 or 2, **characterized in that** the tie piece (26) is of angular configuration, the tie piece (26) being bent in the region of an inner hook-in point (30).

5. Pipe clamp according to Claim 1 or 2, **characterized in that** the tie piece (24), in the region of an inner hook-in point (28), is deformed in the shape of a step.

6. Pipe clamp according to one of Claims 1 to 5, **characterized in that** the hook (14) is formed by an upturn of between 45° and 135°.

## Revendications

1. Collier de serrage, en particulier pour la fixation d'une conduite (5, 6) sur un mur de bâtiment, avec un arceau porteur (10) et un arceau tendeur sensiblement semi-circulaire (15 à 18), qui sont courbés dans une bande métallique, avec des premiers éléments de liaison (11, 13, 19) et des deuxièmes éléments de liaison (14, 20, 24, 26) pour relier les extrémités de l'arceau porteur (10) avec les extrémités de l'arceau tendeur (15 à 18), dans lequel les deuxièmes éléments de liaison (14, 20, 24, 26) comprennent un crochet (14) et une bride (20, 24, 26) avec au moins deux points d'accrochage (21, 22; 27, 28; 29, 30), **caractérisé en ce que** les premiers éléments de liaison (11, 13, 19) présentent une vis de serrage (13) et deux brides (11, 19) et la bride (20, 24, 26) est formée avec au moins deux points d'accrochage (21, 22; 27, 28; 29, 30), de sorte que, lors du montage, après la liaison des deux brides (11, 19) des premiers éléments de liaison (11, 13, 19) avec la vis de serrage (13), elle peut se rabattre latéralement sur l'arceau porteur (10) par un mouvement de pivotement, et que l'arceau porteur (10) et l'arceau tendeur (15 à 18) sont de ce fait reliés ensemble de manière pivotante avec la vis de serrage (13) et le collier de serrage (1, 3, 4) peut être serré avec la vis de serrage (13) après l'accrochage de la bride (20, 24, 26).

2. Collier de serrage selon la revendication 1, **caractérisé en ce que** les points d'accrochage (21, 22; 27, 28; 29, 30) sont configurés comme des fentes.

3. Collier de serrage selon la revendication 1 ou 2, **caractérisé en ce que** la bride (20) est déformée en forme de bourrelet dans la zone d'un point d'accrochage intérieur (22).

4. Collier de serrage selon la revendication 1 ou 2, **caractérisé en ce que** la bride (26) est configurée en forme d'angle, la bride (26) étant courbée dans la zone d'un point d'accrochage intérieur (30).

5. Collier de serrage selon la revendication 1 ou 2, **caractérisé en ce que** la bride (24) est déformée en forme de gradin dans la zone d'un point d'accrochage intérieur (28).

6. Collier de serrage selon l'une quelconque des revendications 1 à 5, **caractérisé en ce que** le crochet (14) est formé par un pliage entre 45° et 135°.
